(19) Europäisches Patentamt
European Patent Office
Office européen des brevets

(11) **EP 0 489 281 B1**

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(51) Int Cl.$^6$: **H04H 1/00**, H04B 1/06, H04B 7/155

(21) Anmeldenummer: **91119315.9**

(22) Anmeldetag: **13.11.1991**

(54) **Anordnung zur Verarbeitung von Signalen im Modulationsweg zu einem Sender**

Arrangement for signal processing in the modulation path to a transmitter

Agencement pour le traitement de signaux dans la voie de modulation vers un émetteur

(84) Benannte Vertragsstaaten:
**DE DK GB SE**

(30) Priorität: **06.12.1990 DE 4038903**

(43) Veröffentlichungstag der Anmeldung:
**10.06.1992 Patentblatt 1992/24**

(73) Patentinhaber: **TELEFUNKEN Sendertechnik GmbH**
**10553 Berlin (DE)**

(72) Erfinder: **Lehmann, Gerald, Dipl.-Ing.**
**W-1000 Berlin 42 (DE)**

(74) Vertreter: **Salhoff, Roland, Dipl.-Ing.**
**Daimler-Benz Aerospace AG**
**Patentabteilung**
**22876 Wedel (DE)**

(56) Entgegenhaltungen:
**EP-A- 0 215 479        EP-A- 0 347 541**

- **FUNKSCHAU Nr. 16, 31. Juli 1987, München, DE, SS. 27-30; J. MAIR: 'Radio Daten System: So kommt RDS zum Sender'**
- **PATENT ABSTRACTS OF JAPAN vol. 14, no. 166 (E-911) 3. März 1990 & JP-A-20 21 713**

**Beschreibung**

Die Erfindung betrifft eine Anordnung zur Verarbeitung von Signalen im Modulationsweg zu einem Sender gemäß dem Oberbegriff des Patentanspruchs 1.

Das Modulationssignal zu einem Sender enthält heute nicht nur die eigentlichen Programmsignale, wie z. B. ein Hörrundfunkprogramm, sondern immer mehr Zusatzsignale, die unterschiedliche Aufgaben erfüllen. Da die Bandbreite des Modulationssignales begrenzt ist, werden diese Zusatzsignale im Frequenzspektrum meist dicht beieinander gelegt.

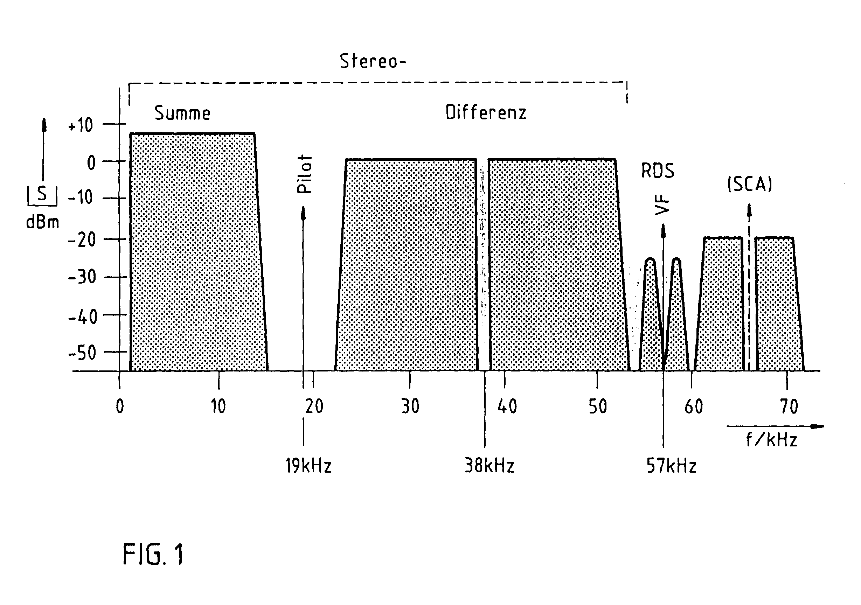

Will man die einzelnen Signalanteile wieder trennen, so ist dies analog meist nur sehr schwierig und mit Qualitätseinbußen zu realisieren. Als Beispiel sei hier das UKW-Multiplexspektrum (UKW = Ultrakurzwellen-Rundfunk) genannt, welches u. a. auch eine Signalanteil für die RDS-Daten (RDS = Radio-Daten-System) besitzt (vgl. FIG. 1). Dieser liegt bei 57 KHz +/- 2,4 KHz.

Aus dem Dokument EP-A-0 347 541 ist ein Phasenmodulator zur digitalen Phasenmodulation eines Trägers durch Datensignale bekannt, wobei die Datensignale vor der Phasenmodulation des Trägers zwecks spektraler Formung und Bandbegrenzung einer digitalen Filterung unterworfen werden.

Im RDS-Ballempfang z. B. geht es nun darum, aus einem UKW-Multiplexsignal die alten RDS-Daten zu entfernen, um sie dann mit neuen RDS-Daten zu ersetzen. Hierzu wurde bereits vorgeschlagen, das Multiplexsignal mit einem Stereodecoder zu demultiplexen, um dann das Signal mit den neuen RDS-Daten völlig neu zu codieren. Diese Lösung ist zum Beispiel in der Druckschrift FUNKSCHAU Nr. 16, 31 Juli 1987, München, DE, Seiten 27-30; J. Mair "Radio Daten System : So kommt RDS zum Sender" beschrieben. Zur Neucodierung müssen das linke und rechte NF-Band mit einem 15 KHz-Tiefpaß gefiltert werden. Für das mit Hilfe eines Stereodecoders neu generierte MPX-Signal (MPX=Multiplex) fehlen jedoch sämtliche Frequenzbereiche oberhalb 53 KHz (wie z. B. RDS- und SCA-Signal (SCA = Subsidiary-Communications-Authorization) und andere Hilfsträger, wobei das SCA-Signal allgemein die Funktion eines Zusatzsignals hat), die dann noch extra hinzuaddiert werden müssen. Dieser aufwendige Weg kann vermieden werden, wenn es möglich ist, ein Filter zu realisieren, daß nur das RDS-Signal aus dem MPX-Signal entfernt. Das bis 53 KHz reichende Differenzsignal und der ab 61 KHz beginnende SCA-Kanal dürfen dabei durch die Filterung nicht beeinflußt werden.

Dies bedeutet, daß in diesem Beispiel ein Bandsperrenfilter realisiert werden muß, welches bis 53 KHz und ab 61 KHz einen Durchlaßbereich und von 54.6 KHz 59,4 KHz einen Sperrbereich besitzt. Ferner muß dabei die Filterfunktion linearphasig sein, damit beim späteren Demultiplexen des UKW-MPX-Signales die beiden Stereo-Kanäle des Programms gut getrennt werden können.

Die Aufgabe der Erfindung besteht somit darin, eine Anordnung der eingangs genannten Art zu schaffen, die möglichst breitbandig nicht nur Signale aus dem Audiofrequenzbereich, sondern auch aus höheren Frequenzbereichen verarbeiten kann, die linearphasig ist und mit der gegebenenfalls innerhalb der Bandbreite des zu verarbeitenden Signals einzelne im Vergleich zur Bandbreite schmale Frequenzbänder des Signalspektrums mit eigenen Filterfunktionen beaufschlagt werden können, ohne daß die übrigen Frequenzanteile des Signals dadurch in Amplitude und/oder Phase beeinflußt werden.

Die erfindungsgemäße Lösung dieser Aufgabe ist im Patentanspruch 1 beschrieben. Die übrigen Ansprüche enthalten vorteilhafte Aus- und Weiterbildungen der Erfindung.

Die erfindungsgemäße Lösung der Aufgabe besteht darin, daß das in der Anordnung zur Verarbeitung von Signalen im Modulationsweg zu einem Sender enthaltene Filter ein digitales Filter ist.

Ein digitales Filter bietet u. a. Vorteile hinsichtlich seiner Genauigkeit, Reproduzierbarkeit und Flexibilität. In einer Weiterbildung der Erfindung arbeitet das digitale Filter daher mit einer Filterfunktion, die in der Art variabel ist, daß aus mehreren vorher definierten Übertragungsfunktionen eine dieser Übertragungsfunktionen als Filterfunktion ausgewählt wird und zu einem späteren Zeitpunkt gegebenenfalls auf eine andere dieser Übertragungsfunktionen als neue Filterfunktion umgeschaltet werden kann, gegebenenfalls gefolgt von weiteren Umschaltungen auf die ursprüngliche Übertragungsfunktion oder auf andere dieser Funktionen. Mit dieser Möglichkeit können zu verschiedenen Zeitpunkten beispielsweise unterschiedliche Frequenzbänder innerhalb des Signalspektrums unterschiedlich verarbeitet werden. Die einzelnen Frequenzanteile können individuell in ihrer Amplitude unverändert gelassen, gedämpft oder auch verstärkt werden.

Insbesondere im Hinblick auf den Austausch von RDS-Daten ist in einer vorteilhaften Ausbildung der Erfindung vorgesehen, daß das digitale Filter eine Übertragungsfunktion als Filterfunktion besitzt, gemäß der das Filter als digitales Bandsperrenfilter ein oder mehrere frequenzbandbegrenzte Zusatzsignale (wie z. B. das RDS-Signal) innerhalb des Signalspektrums im Modulationsweg zum Sender in ihrer Amplitude soweit dämpft, daß in die entstandene "Lücke" bzw. entstandenen "Lücken" im Frequenzspektrum des zu verarbeitenden Signals anschließend neue frequenzbandbegrenzte Zusatzsignale (wie z. B. das neue RDS-Signal) eingefügt werden können, ohne daß dabei das verbleibende Restsignal das neue Zusatzsignal störend beeinflußt.

Eine besonders im Hinblick auf die geforderte Linearphasigkeit vorteilhafte Ausführung des digitalen Filters der erfindungsgemäßen Anordnung ist das an sich bekannte Transversalfilter, das auch unter der Bezeichnung FIR-Filter (FIR = Finite-Duration-Impulse-Response) bekannt ist (vgl. hierzu z. B. Meinke, Gundlach: "Taschenbuch der Hochfrequenztechnik", Band 1: Grundlagen; 4. Auflage (Springer, Berlin, 1986), Seiten F4 - F6).

Das Filter arbeitet nach einem Verfahren, bei dem im eingeschwungenen Zustand eine zeitliche Folge von digitalen Ausgangssignalen $a_i$ gebildet wird, die jeweils die Summe von N Produkten sind, die ihrerseits jeweils das Ergebnis einer Multiplikation eines digitalen Signals erster Art mit einem digitalen Signal zweiter Art sind. Genauer gesagt, werden bei diesem Verfahren zeitlich aufeinanderfolgende digitale Eingangssignale $e_i, e_{i+1}, ... e_{i+N-1}$ (als Signale erster Art) während eines Taktintervalls $\Delta T_i$ mit vorgegebenen digitalen Filterkoeffizienten $c_1...c_N$ multipliziert und anschließend die so erhaltenen Produkte zu dem entsprechenden digitalen Ausgangssignal $a_i$ aufsummiert gemäß der Vorschrift:

$$a_i = \sum_{r=1}^{N} c_r \cdot e_{i+r-1} \qquad (i=1,2...) \qquad (1)$$

Im nächsten Taktintervall $\Delta T_{i+1}$ wird gemäß dieser Vorschrift das nächste digitale Ausgangssignal $a_{i+1}$ gebildet:

$$a_{i+1} = \sum_{r=1}^{N} c_r \cdot e_{i+r} \qquad (i=1,2...) \qquad (2)$$

und im darauf folgenden Taktintervall $\Delta T_{i+2}$ das digitale Ausgangssignal $a_{i+2}$:

$$a_{i+2} = \sum_{r=1}^{N} c_r \cdot e_{i+r+1} \qquad (i=1,2...) \qquad (3)$$

usw.

Die Folge der digitalen Eingangssignale $e_i$ ergibt sich dabei i.a. durch Abtastung eines Analogsignals mit der Abtastrate $f_1 = 1/\Delta T$, sodaß synchron mit jeder Abtastung, d.h. mit jeder Generierung eines digitalen Eingangssignals $e_i$ in dem entsprechenden Taktintervall $\Delta T_i$ auch ein digitales Ausgangssignal $a_i$ generiert wird.

Die Leistungsfähigkeit, d.h. die Rechenkapazität der Filter, mit denen diese Verfahren zur digitalen Signalverarbeitung durchgeführt werden, wird allgemein dadurch bemessen, wie groß die Bandbreite des zu verarbeitenden analogen Signals ist und nach welcher Funktion und mit welcher Genauigkeit dieses Signal bearbeitet werden muß.

Anhand der Bandbreite kann man nach dem Abasttheorem eine minimale Abtastfrequenz spezifizieren. Generell müssen digitale Signalverarbeitungssysteme ihren Rechenalgorithmus innerhalb eines Abtastintervalls ausgeführt haben, d.h. je höher die Bandbreite, desto kürzer die dafür zur Verfügung stehende Zeit.

Bei der digitalen Filterung eines analogen Signals im Modulationsweg zu einem Sender ist ein Herunter- und Heraufsetzen der Abtastfrequenz häufig notwendig, da einerseits zur Vereinfachung eines vorgeschalteten analogen Anti-Aliasing-Filters bzw. eines nachgeschalteten Rekonstruktionsfilters die Abtastrate so hoch wie möglich zu wählen ist. Dies steht aber andererseits im Gegensatz zu der Bedingung, die Abtastrate klein zu wählen, um zwischen den einzelnen Eingangswerten möglichst viel Rechenzeit zur Verfügung zu haben, um kompliziertere Übertragungsfunktionen zu realisieren.

Die Lösung besteht darin, die Abtastrate am analogen Eingang hoch zu wählen, um sie dann für die eigentliche Berechnung der gewünschten Übertragungsfunktion im Rechenwerk herunterzusetzen. Damit dieses ohne Aliasing-Effekte durchgeführt werden kann, muß vor dem eigentlichen digitalen Filter ein Filter sein, was die Aliasing-Effekte verhindert. Insofern kann man dieses Filter, was in der digitalen Signalkette nach der Analog/Digital-Wandlung, aber vor dem eigentlichen digitalen Filter kommt, als digitales Anti-Aliasing-Filter bezeichnen. Zusammengefaßt gehen in dieses digitale Anti-Aliasing-Filter Eingangswerte mit der wirklichen Abtastfrequenz hinein, Ausgangswerte kommen aber mit der heruntergesetzten Rate heraus.

Mit Hilfe eines dem eigentlichen digitalen Filter nachgeschalteten digitalen Interpolations- oder Rekonstruktionsfilters ist es möglich, die Ausgaberate wieder auf die eigentliche Abtastfrequenz zu setzen. Dadurch ist das Spektrum mit der (höheren) Abtastfrequenz periodisch, so daß das nachfolgende analoge Rekonstruktionsfilter einfacher gestaltet werden kann.

Das erfindungsgemäße digitale Filter weist folgende Vorteile auf:

- Es ist linearphasig.

- Es ist nicht nur im NF-Bereich einsetzbar, sondern auch in Frequenzbereichen darüber hinaus.

- Filterkennwerte wie Filterordnung, Abtastrate sind einstellbar. Wahlweise kann durch eine dem Rechenwerk des Filters vorgeschaltete, aber in das System integrierte, digitale Filterstruktur die Durchsatzrate $f_1$ der Eingangswerte am Rechenwerk auf den Wert $f_1=f/n$ (n = 2, 3...) (f = Abtastfrequenz) reduziert werden. Diese Einstellung kann auch ohne eine Hardwaremodifikation erfolgen und wird durch ein digitales Steuerwort bestimmt. Durch diese Option kann die Rechenleistung effektiver eingesetzt werden, da mehr Rechenleistung zur Verfügung steht. Wahlweise kann (in Umkehr hierzu) durch eine dem Rechenwerk nachgeschaltete, aber in das System integrierte, digitale Filterstruktur die Ausgaberate f der Ausgangswerte am Ausgang des digitalen Systems auf den Wert f = $n \cdot f_1$ ($f_1$ = Durchsatzrate im Rechenwerk) erhöht werden. Diese Einstellung kann ebenfalls ohne eine Hardwaremodifikation erfolgen und wird durch ein digitales Steuerwerk bestimmt. Durch eine Datenschnittstelle ist es möglich, Kennwerte dem System zu übermitteln, wodurch z. B. die Übertragungsfunktion, der Filtergrad, die Filterstruktur und/oder die Abtastfrequenz verändert werden können.

- Mit dem erfindungsgemäßen System können insbesondere

  - Signale, deren Bandbreite größer 80 KHz ist,
  - unmodulierte Signale,
  - Signale, die aus mehreren Frequenzbändern bestehen (Multiplexband),
  - Signale eines Multiplexbandes im Bereich des Rundfunks,
  - Signale eines Multiplexbandes im Bereich des UKW-Rundfunks

auf effiziente Art und Weise verarbeitet werden.

- Es können nicht nur FIR-Filterstrukturen (FIR = FinitiDuration-Impulse-Response) realisiert werden, sondern auch IIR-Filterstrukturen (IIR = Infinite-Duration-Impulse-Response).

Mit der erfindungsgemäßen Anordnung kann heutzutage ein Signalverarbeitungs- und/oder -erzeugungssystem geschaffen werden, das Bandbreiten von mindestens 80 KHz verarbeiten kann, linearphasig ist und das Eingangssignal so bearbeitet, daß Frequenzbänder des Eingangssignales, deren Abstand zueinander rund das $(7 \cdot 10^{-3})$-fache der Bandbreite ist, mit eigenen Filterfunktionen beaufschlagt werden können. Die nach der Bearbeitung weiterverwendeten Frequenzbänder sind dabei in Amplitude und Phase nur unwesentlich verändert.

In der Praxis (z. B. beim RDS-Ballempfang) wird meist die Aufgabe gestellt, bestimmte Signalanteile (z. B. die alten RDS-Daten) zu ersetzen. Dazu müssen die alten Signalanteile aus den Signalspektrum herausgefiltert werden und die neuen mit Hilfe eines Summierpunktes hinzugefügt werden.

Im folgenden wird die Erfindung anhand der Figuren näher erläutert. Es zeigen:

FIG. 1    das eingangs bereits erwähnte Frequenzspektrum des UKW-Multiplexsignals

FIG. 2    das Schaltbild einer vorteilhaften Ausbildung der erfindungsgemäßen Anordnung für den Austausch von RDS-Daten bei einem Sender mit Ballempfang

FIG. 3    das Schaltbild einer vorteilhaften Ausführungsform des RDS-Bandsperrenfilters in der erfindungsgemäßen Anordnung gemäß FIG. 2

FIG. 4    typische Übertragungsfunktionen einzelner Filter des RDS-Bandsperrenfilters gemäß FIG. 3.

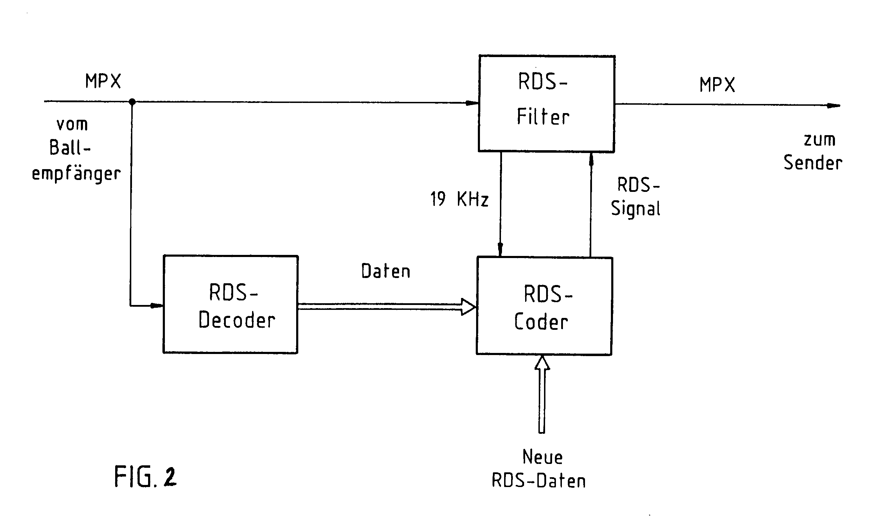

Bei der in FIG. 2 gezeigten Anordnung zur Bearbeitung des UKW-Multiplexsignals (vgl. FIG. 1) im Modulationsweg zu einem UKW-Sender zwecks Austausch des RDS-Signals benötigt der RDS-Coder, der das neue RDS-Signal erzeugen soll, einen 19 KHz-Pilotton, der im phasenstarren Bezug mit dem 19 KHz-Pilotton steht, der sich in dem mit dem RDS-Signal zu ergänzenden Multiplexsignal befindet. Der RDS-Coder empfängt die alten RDS-Daten von einem RDS-Decoder, der eingangsseitig mit dem (in der FIG. 2 nicht gezeigten) Ballempfänger verbunden ist und von dort das UKW-Multiplexsignal erhält, das gleichzeitig auch in ein RDS-Bandsperrenfilter eingespeist wird, in dem zunächst der alte RDS-Signalanteil aus dem Spektrum herausgefiltert wird und anschließend die vom RDS-Coder erzeugten neuen RDS-Daten in das Spektrum eingefügt werden. Das mit den neuen RDSDaten versehene UKW-Multiplexsignal wird dann an den (ebenfalls in der FIG. 2 nicht gezeigten) UKW-Sender weitergeleitet.

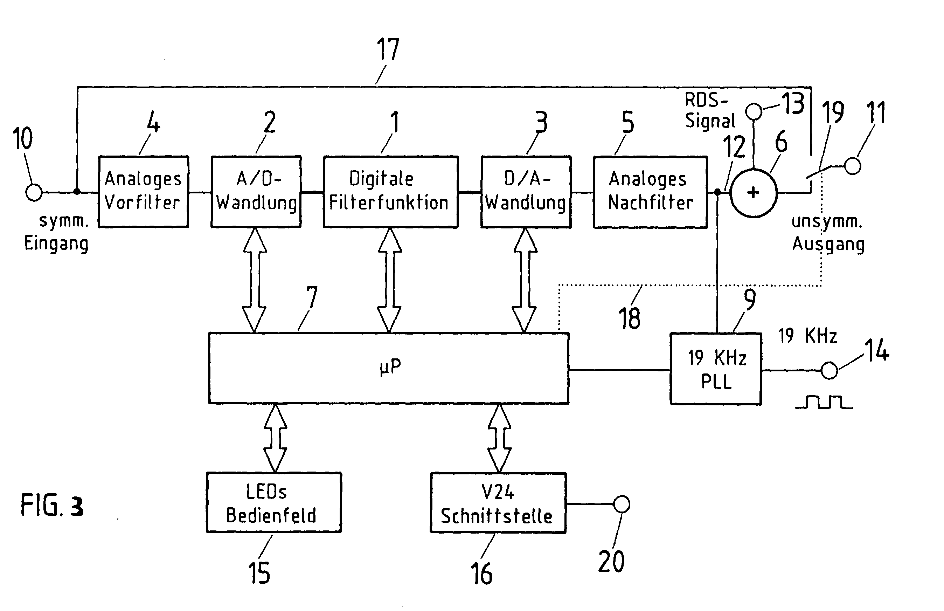

In FIG. 3 ist eine vorteilhafte Ausführungsform des RDS-Bandsperrenfilters in der erfindungsgemäßen Anordnung zum Austausch von RDS-Daten beim Ballempfang gemäß FIG. 2 gezeigt.

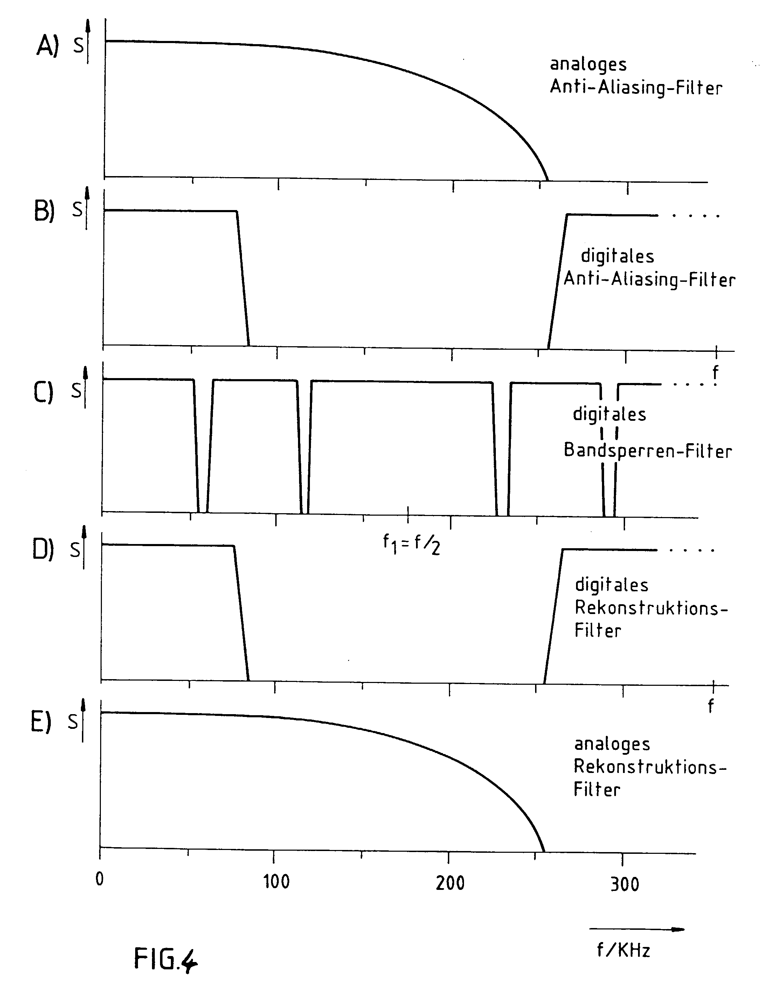

Das Bandsperrenfilter weist einen symmetrischen Eingang 10 auf, an den sich ein analoges Anti-Aliasing-Vorfilter 4, ein A/D-Wandler 2 (mit einem nicht gezeigten und zwischen Vorfilter 4 und Wandler 2 geschalteten Abtast- und Halteglied), das digitale Filter 1, ein D/A-Wandler 3 und ein analoges Rekonstruktions-Nachfilter 5 anschließen. Der Ausgang des analogen Rekonstruktions-Nachfilters 5 ist mit dem ersten Eingang 12 eines Summiergliedes 6 verbunden, das ausgangsseitig über einen Schalter 19 mit dem unsymmetrischen Ausgang 11 des RDS-Bandsperrenfilters verbunden ist. Der zweite Eingang 13 des Summiergliedes 6 ist für die Einspeisung der (vom RDS-Coder (vgl.FIG. 4) erzeugten) neuen RDS-Daten vorgesehen. Der Eingang 10 des Bandsperrenfilters ist über eine durch den Schalter 19 zuschaltbare Umgehungsleitung 17 direkt mit dem Ausgang 11 verbindbar, wobei bei Zuschaltung der Umgehungsleitung 17 die Filterkette 1-5 mit dem nachgeschalteten Summierglied 6 am Ausgang des Summiergliedes 6 vom Ausgang 11 des Bandsperrenfilter abgetrennt wird.

Der Ausgang des analogen Rekonstruktionsfilters 5 ist außerdem mit einer Phase-Lock-Loop-Anordnung 9 für den 19 KHz-Pilotton verbunden, deren Ausgang 14 den 19 KHz-Pilotton für den RDS-Coder liefert (vgl. FIG. 4). Die Steuereingänge von A/D-Wandler 2, Digitalfilter 1, D/A-Wandler 3, Schalter 19 und Phase-Lock-Loop-Anordnung 9 sind mit einem Mikroprozessor 7 verbunden, der außerdem mit einem Bedienfeld 15 verbunden ist (z.B. zum Zwecke der Umprogrammierung oder des manuellen Aufrufs von gespeicherten Übertragungsfunktionen für das Digitalfilter 1) und der über eine V.24-Schnittstelle 16 und eine Anschlußklemme 20 mit weiteren Rechnern bzw. Mikroprozessoren gekoppelt werden kann.

Das digitale Filter 1 ist vorzugsweise mit diskreten MACs und addressier- und steuerbaren Zwischenspeichern bzw. zusätzlichen Zwischenspeichern realisiert und kann durch den Mikroprozessor bei Bedarf in seiner Übertragungsfunktion so strukturiert werden, daß z.B. ein erster Teil des Filters 1 auf der Seite des A/D-Wandlers 2 als digitales Anti-Aliasing-Filter und ein zweiter Teil des Filters 1 auf der Seite des D/A-Wandlers 3 als digitales Interpolating- bzw. digitales Rekonstruktions-Filter und der verbleibende mittlere Teil des Filters 1 zwischen diesen beiden Filter-Teilen als eigentliches digitales RDS-Bandsperrenfilter arbeiten.

In FIG. 4 sind beispielhaft typische Übertragungsfunktionen einer solchen Filterkette mit analogem Anti-Aliasing-Vorfilter (FIG. 4a), digitalem Anti-Aliasing-Filter (FIG. 4b), digitalem Bandsperrenfilter (FIG. 4c), digitalem Rekonstruktionsfilter (FIG. 4d) und analogem Rekonstruktions-Nachfilter (FIG. 4e) aufgezeigt, und zwar für den Fall, daß eine eingangsseitige Abtastfrequenz von beispielhaft f=340 KHz durch das digitale Anti-Aliasing-Filter auf eine Bandsperrenfilter-Eingangsfrequenz $f_1$=f/2=170 KHz herabgesetzt und anschließend durch das digitale Rekonstruktionsfilter wieder auf den ursprünglichen Wert heraufgesetzt wird.

Wie man anhand dieser Frequenzgänge unschwer erkennen kann, müssen wegen der sehr steilen Flanken im Frequenzgang der beiden digitalen Vor- und Nachfilter die beiden analogen Vor- und Nachfilter nur sehr mäßig steile Flanken im Frequenzgang aufweisen, wodurch sich der Aufbau dieser Filter erheblich vereinfacht. In der FIG. 4 ist außerdem zu erkennen, daß mit einem digitalen Bandsperrenfilter wegen der erzielbaren großen Flankensteilheit im Frequenzgang frequenzmäßig sehr scharf begrenzte Sperrbereiche realisiert werden können, die so dimensioniert sind, daß vom bis 72 KHz reichende UKW-Multiplexsignal (vgl. FIG. 1) nur der (alte) RDS-Signalanteil herausgefiltert wird, ohne daß die übrigen Signalanteile des Multiplexsignals (insbesondere das bis 53 KHz reichende Stereo-Differenzsignal und der ab 61 KHz beginnende SCA-Kanal) merklich beeinflußt werden.

Das erfindungsgemäße RDS-Bandsperrenfilter gemäß FIG. 3 arbeitet wie folgt:

Das am Eingang 10 anliegende und vom Ballempfänger herstammende UKW-Multiplexsignal mit den alten RDS-Daten wird durch das analoge Anti-Aliasing-Vorfilter 4 zunächst einer ersten Bandbegrenzung unterworfen (vgl. auch FIG. 4a). Das bandbegrenzte Signal wird anschließend durch das (nicht gezeigte) Abtast- und Halteglied und den A/D-Wandler 2 in eine zeitliche Folge von digitalen Eingangssignalen mit der Taktfrequenz f umgewandelt, die gegebenenfalls im eingangsseiten ersten Teil des digitalen Filters 1, der als digitales Anti-Aliasing-Filter programmiert ist, durch Decimating einer weiteren Bandbegrenzung unterworfen werden (vgl. FIG. 4b), was mit einer entsprechenden Herabsetzung der Taktfrequenz auf einen Wert $f_1$ = f/n (n=2,3...) verbunden ist.

Anschließend werden die digitalen Eingangssignale (bzw. die durch Decimating weiter bandbegrenzten digitalen Eingangssignale) im digitalen Filter 1 (bzw. in dessen mittlerem Teil) der eigentlichen digitalen Filterung in der weiter oben beschriebenen Art unterworfen, wobei die Filterkoeffizienten $c_1...c_N$ so gewählt sind, daß lediglich der RDS-Signalanteil herausgefiltert wird, während die übrigen Signalanteile des Multiplexspektrums mehr oder minder unverändert bleiben (vgl. FIG. 4c). Die zeitliche Folge der digitalen Ausgangssignale des digitalen Bandsperrenfilters, die also keinen RDS-Signalanteil mehr enthalten, werden anschließend gegebenenfalls im ausgangsseitigen zweiten Teil des digitalen Filters 1 zunächst durch eine Interpolatingprozedur in ihrer Taktfrequenz auf den ursprünglichen Wert $f=n \cdot f_1$ heraufgesetzt (vgl. FIG. 4d), bevor sie in dem D/A-Wandler 3 in ein analoges Signal umgewandelt werden, das im anschließenden analogen Rekonstruktionsfilter 5 einer weiteren Bandbegrenzung unterworfen wird (vgl. FIG. 4e). Das auf diese Art und Weise von den alten RDS-Daten befreite UKW-Multiplexsignal wird anschließend über den Eingang 12 dem Summierglied 6 zugeführt, dem phasenstarr zu diesem Multiplexsignal außerdem noch über den Eingang 13 die neuen RDS-Daten (vom RDS-Coder) zugeführt werden. Die beiden im Summierglied 6 zum kompletten UKW-Multiplexsignal kombinierten Signale werden anschließend über den Schalter 19, der im Normal den Ausgang des Summiergliedes 6 mit dem Ausgang 11 des RDS-Bandsperrenfilters verbindet, an den Ausgang 11 des Bandsperrenfilter gegeben und von dort dem UKW-Sender zugeleitet. Die zur synchronen Einfügung der neuen RDS-Daten erforderliche phasenstarre Beziehung zwischen den Ausgangssignalen der Filterkette 1, 3, 5 und den neuen RDS-Daten wird mit Hilfe der Phase-Lock-Loop-Anordnung (PLL) 9 für den 19 KHz-Pilotton realisiert. Hierzu wird mittels des Ausgangssignals der Filterkette in der PLL 9 ein 19 KHz-Referenzsignal erzeugt, das über den Ausgang 14 dem RDS-Coder (vgl. FIG. 4) als Referenzsignal zugeführt wird, sodaß dieser die neuen RDS-Daten phasenstarr zum Ausgangssignal der Filterkette erzeugen kann.

Der Mikroprozesor 7 ist als zentrale Steuerung für die A/D- bzw. D/A-Wandlung sowie die digitale Filterung und die PLL vorgesehen.

Das Modulationssignal darf aufgrund von Störungen am Filter nicht ausfallen. Sollte das digitale Filter daher nicht störungsfrei arbeiten, kann mit Hilfe der Umgehungsschaltung 17, 18, 19 dennoch ein (dann allerdings unbearbeitetes) Modulationssignal zum Sender geführt werden, sodaß es zu keinem Ausfall des Programms kommt. Die Umgehungsschaltung kann durch einen Befehl von außen, aber auch bei interner Fehlererkennung aktiviert werden. Dabei wird der Eingang 10 des RDS-Bandsperrenfilter über die Umgehungsleitung 17 und den Schalter 19 direkt mit dem Ausgang 11 des Bandsperrenfilters verbunden und gleichzeitig der Ausgang des Summiergliedes 6 vom Ausgang 11 abgekoppelt. Die Ansteuerung des Schalters 19 erfolgt dabei über die Steuerleitung 18 durch den Mikroprozessor 7.

**Patentansprüche**

1. Anordnung zur Verarbeitung von Frequenz-Multiplex-Signalen im Modulationsweg eines Rundfunksenders, dadurch gekennzeichnet, daß mittels eines digitalen Filters (1) aus dem Frequenz-Multiplex-Signal bandbegrenzte Signalanteile mit hoher Frequenzselektivität herausgefiltert sind.

2. Anordnung nach Anspruch 1, dadurch gekennzeichnet, daß die bandbegrenzten Signalanteile Radio-Daten-Signale sind, die in dem Frequenz-Multiplex-Signal eines FM-Senders enthalten sind.

3. Anordnung nach Anspruch 1 oder 2, dadurch gekennzeichnet, daß dem Frequenz-Multiplex-Signal in die durch die Filterung entstandene Lücke ein neuer Signalaustausch innerhalb des Frequenz-Multiplex-Signales vorgenommen ist.

4. Anordnung nach einem der Ansprüche 1 bis 3, dadurch gekennzeichnet, daß das digitale Filter (1) gemäß einer Filterfunktion arbeitet, die in der Art variabel ist, daß aus mehreren vorher definierten übertragungsfunktionen eine dieser übertragungsfunktionen als Filterfunktion gewählt ist und zumindest zu einem späteren Zeitpunkt gegebenenfalls auf eine andere dieser Übertragungsfunktionen als neue Filterfunktion umgeschaltet werden kann.

5. Anordnung nach einem der Ansprüche 1 bis 4, dadurch gekennzeichnet, daß dem digitalen Filter (1) eingangsseitig ein digitales Anti-Aliasing-Filter vor- und/oder ausgangsseitig ein digitales Rekonstruktions-Filter nachgeschaltet ist.

6. Anordnung nach Anspruch 5, dadurch gekennzeichnet, daß das digitale Anti-Aliasing-Filter und/oder das digitale Rekonstruktions-Filter vom Aufbau her (jeweils) vom gleichen Filtertyp ist (sind) wie das digitale Filter (1) und zusammen mit dem digitalen Filter (1) ein digitales Gesamtfilter bildet (bilden), das vorzugsweise mit einem Adressier- und/oder Steuerwerk verbunden ist.

7. Anordnung nach einem der Ansprüche 1 bis 6, dadurch gekennzeichnet, daß dem digitalen Filter (1) bzw. digitalen Gesamtfilter eingangsseitig ein A/D-Wandler (2) vor- und/oder ausgangsseitig ein D/A-Wandler (3) nachgeschaltet ist.

8. Anordnung nach Anspruch 7, dadurch gekennzeichnet, daß dem A/D-Wandler (2) eingangsseitig ein analoges Anti-Aliasing-Filter (4) vor- und/oder dem D/A-Wandler (3) ausgangsseitig ein analoges Rekonstruktions-Filter (5) nachgeschaltet ist.

9. Anordnung nach einem der Ansprüche 1 bis 8, dadurch gekennzeichnet, daß dem digitalen Filter (1) (oder dem digitalen Gesamtfilter oder dem analogen Rekonstruktions-Filter (5) als letztem Filter der hintereinandergeschalteten Filter (1, 3, 5)) ausgangsseitig ein Summierglied (6) mit mindestens zwei Eingängen (12, 13) nachgeschaltet ist und daß der eine Eingang (12) dieser mindestens zwei Eingänge (12, 13) des Summiergliedes (6) mit dem Ausgang des digitalen Filters (1) (oder des digitalen Gesamtfilters oder des analogen Rekonstruktions-Filters (5)) verbunden ist und jeder weitere Eingang (13) dieser mindestens zwei Eingänge (12, 13) zur Einspeisung jeweils eines externen frequenzbegrenzten Zusatzsignals vorgesehen ist, das die durch die vorgeschalteten Filter (1, 3, 5) geschaffene(n) Lücke(n) im Frequenzspektrum auffüllt.

10. Anordnung nach einem der Ansprüche 1 bis 9, dadurch gekennzeichnet, daß ein weiterer Ausgang (14) vorgesehen ist für ein mit Hilfe einer Phase-Lock-Loop-Anordnung (9) aus dem Ausgangssignal des digitalen Filters (1) bzw. digitalen Gesamtfilters (oder der hintereinander geschalteten Filter (1, 3, 5)) gewonnenen Pilotsignals, insbesondere eines 19 KHz-Pilotsignals bei Multiplex-Signalen für einen FM-Sender.

11. Anordnung nach einem der Ansprüche 1 bis 10, dadurch gekennzeichnet, daß eine über einen Schalter (19) zuschaltbare und den Eingang (10) der Anordnung mit ihrem Ausgang (11) direkt verbindende und bei ihrer Zuschaltung das Ausgangssignal des oder der Filter (1, 3, 5) bzw. des Summiergliedes (6) vom Ausgang (11) der Anordnung abtrennende Umgehungsleitung (17) vorgesehen ist.

12. Anordnung nach einem der Ansprüche 1 bis 11, dadurch gekennzeichnet, daß zur Ansteuerung des digitalen Filters (1) bzw. digitalen Gesamtfilters und/oder des A/D-Wandlers (2) und/oder des D/A-Wandlers (3) und/oder des Schalters (19) und/oder der Phase-Lock-Loop-Anordnung (9) ein Mikroprozessor (7) vorgesehen ist.

13. Anordnung nach einem der Ansprüche 2 bis 12, für den RDS-Ballempfang, dadurch gekennzeichnet,

   - daß ein RDS-Coder ausgangsseitig mit einem der weiteren Eingänge (13) des Summiergliedes (6) und referenzeingangsseitig mit dem weiteren Ausgang (14) für das 19 KHz-Pilotsignal verbunden ist;

   - daß der RDS-Coder einen ersten und einen zweiten Eingang aufweist und daß der erste Eingang des RDS-Coders zur Einspeisung der vom Ballempfänger empfangenen alten RDS-Daten mit dem Ausgang eines RDS-Decoders verbunden ist und der zweite Eingang des RDS-Coders zur Einspeisung der neuen RDS-Daten vorgesehen ist;

   - daß der RDS-Decoder eingangsseitig mit dem Ballempfänger verbunden ist.

## Claims

1. Arrangement for processing frequency multiplex signals in the modulation path of a radio transmitter, characterised thereby that band-limited signal components with high frequency selectivity are filtered out of the frequency multiplex signal by means of a digital filter (1).

2. Arrangement according to claim 1, characterised thereby that the band-limited signal components are radio data signals, which are contained in the frequency multiplex signal of a frequency-modulated signal.

3. Arrangement according to claim 1 or 2, characterised thereby that a new signal exchange within the frequency multiplex signal is undertaken at the frequency multiplex signal in the gaps arising due to the filtering.

4. Arrangement according to one of claims 1 to 3, characterised thereby that the digital filter (1) operates according to a filter function which is variable in the manner that from several previously defined transmission functions one of these transmission functions is selected as a filter function and at least at a later instant can be switched over as a new filter function, in a given case to another of these transmission functions.

5. Arrangement according to one of claims 1 to 4, characterised thereby that a digital anti-aliasing filter is connected to the digital filter (1) upstream thereof at the input side and/or a digital reconstruction filter is connected to the digital filter (1) downstream thereof at the output side.

6. Arrangement according to claim 5, characterised thereby that the digital anti-aliasing filter and/or the digital reconstruction filter is or are in terms of construction of or respectively of the same filter type as the digital filter (1) and forms or form together with the digital filter (1) a digital total filter which is preferably connected with an address device and/or a control device.

7.  Arrangement according to one of claims 1 to 6, characterised thereby that an analog-to-digital converter (2) is connected to the digital filter (1) or digital total filter upstream therof at the input side and/or a digital-to-analog converter (3) is connected to the digital filter (1) or digital total filter downstream thereof at the output side.

8.  Arrangement according to claim 7, characterised thereby that an analog anti-aliasing filter (4) is connected to the analog-to-digital converter (2) upstream thereof at the input side and/or an analog reconstruction filter (5) is connected to the digital-to-analog converter (3) downstream thereof at the output side.

9.  Arrangement according to one of claims 1 to 8, characterised thereby that a summating member (6) with at least two inputs (12, 13) is connected to the digital filter (1) (or to the digital total filter or to the analog reconstruction filter (5) as last filter of the filters (1, 3, 5) connected one behind the other) downstream thereof at the output side and that the one input (12) of these at least two inputs (12, 13) of the summating member (6) is connected with the output of the digital filter (1) (or the digital total filter or the analog reconstruction filter (5)) and each further input (13) of these at least two inputs (12, 13) is provided for the suply of a respective external frequency-limited supplementary signal which fills up the gap or gaps, which is or are created by the filters (1, 3, 5) connected upstream, in the frequency spectrum.

10. Arrangement according to one of claims 1 to 9, characterised thereby that a further output (14) is provided for a pilot signal, especially a 19 KHz pilot signal in the case of multiplex signals for a frequency-modulated transmitter, obtained with the aid of a phase locked loop arrangement (9) from the output signal of the digital filter (1) or digital total filter (or the filters (1, 3, 5) connected one behind the other).

11. Arrangement according to one of claims 1 to 10, characterised thereby that a bypass line (17), which is connectible into the circuit by way of a switch (19) and directly connects the input (10) of the arrangement with its output (11) and which when it is connected into the circuit cuts off the output signal of the filter or filters (1, 3, 5) or of the summating member (6) from the output (11) of the arrangement, is provided.

12. Arrangement according to one of claims 1 to 11, characterised thereby that a microprocessor (7) is provided for controlling the digital filter (1) or digital total filter and/or the analog-to-digital converter (2) and/or the digital-to-analog converter (3) and/or the switch (19) and/or the phase locked loop arrangement (9).

13. Arrangement according to one of claims 2 to 12, for RDS ball reception, characterised thereby

    -   that an RDS coder is connected at the output side with one of the further inputs (13) of the summating member (6) and at the reference input side with the further output (14) for the 19 KHz pilot signal;
    -   that the RDS coder has a first and a second input and that the first input of the RDS coder is connected, for the supply of the old RDS data received from the ball receiver, with the output of an RDS decoder and the second input of the RDS coder is provided for the supply of the new RDS data;
    -   that the RDS decoder is connected at the input side with the ball receiver.


**Revendications**

1.  Dispositif de traitement de signaux multiplexés en fréquence dans la voie de modulation d'un émetteur de radiodiffusion, caractérisé en ce qu'à l'aide d'un filtre numérique (1), à partir du signal multiplexé en fréquence, des composantes de signal à bande limitée sont filtrées avec une sélectivité en fréquence accrue.

2.  Dispositif selon la revendication 1, caractérisé en ce que les composantes de signal à bande limitée sont des signaux de données radio, qui sont contenus dans le signal multiplexé en fréquence d'un émetteur FM.

3.  Dispositif selon la revendication 1 ou 2, caractérisé en ce que, pour le signal multiplexé en fréquence, dans les lacunes provoquées par le filtrage, un nouvel échange de signal est effectué à l'intérieur du signal multiplexé en fréquence.

4.  Dispositif selon l'une des revendications 1 à 3, caractérisé en ce que le filtre numérique (1) fonctionne selon une fonction de filtrage, qui est variable de telle sorte qu'à partir de plusieurs fonctions de transmission préalablement définies, une de ces fonctions de transmission est choisie en fonction de filtrage et au moins à un instant plus tard, une commutation peut être effectuée sur une autre de ces fonctions de transmission en tant que nouvelle fonction de filtrage.

**5.** Dispositif selon une des revendications 1 à 4, caractérisé en ce qu'en amont du filtre numérique (1) est disposé, côté entrée, un filtre numérique anti-moirage et/ou en aval, côté sortie, est disposé un filtre numérique de reconstitution.

**6.** Dispositif selon la revendication 5, caractérisé en ce que le filtre numérique anti-moirage et/ou le filtre numérique de reconstitution est/sont structuralement de type de filtre identique au filtre numérique (1) et forme(nt) conjointement avec le filtre numérique (1) un filtre global numérique, qui est de préférence relié à un dispositif d'adressage et/ou de commande.

**7.** Dispositif selon l'une des revendications 1 à 6, caractérisé en ce qu'en amont du filtre numérique (1) ou du filtre numérique global est disposé, côté entrée, un convertisseur analogique/numérique (2) et/ou en aval, côté sortie, est disposé un convertisseur numérique/analogique (3).

**8.** Dispositif selon la revendication 7, caractérisé en ce qu'en amont du convertisseur analogique/numérique (2), côté entrée, est disposé un filtre anti-moirage analogique (4) et/ou en aval du convertisseur numérique/analogique (3), côté sortie, est disposé un filtre de reconstitution analogique (5).

**9.** Dispositif selon une des revendications 1 à 8, caractérisé en ce qu'en aval du filtre numérique (1) (ou du filtre numérique global ou du filtre de reconstitution analogique (5) en tant que dernier filtre des filtres disposés en succession (1, 3, 5)) est disposé, côté sortie, un additionneur (6) avec au moins deux entrées (12, 13) et en ce qu'une entrée (12) d'au moins ces deux entrées (12, 13) de l'additionneur (6) est reliée à la sortie du filtre numérique (1) (ou du filtre global numérique ou du filtre de reconstitution analogique (5)) et chaque autre entrée (13) de ces au moins deux entrées (12, 13) est prévue en vue de l'application d'un signal supplémentaire limité en fréquence extérieur, qui comble, dans le spectre de fréquence, la ou les lacune(s) créée(s) par les filtres en amont (1, 3, 5).

**10.** Dispositif selon une des revendications 1 à 9, caractérisé en ce qu'une autre sortie (14) est prévue pour un signal pilote obtenu à l'aide d'une boucle à verrouillage de phase (9) à partir du signal de sortie du filtre numérique (1) ou du filtre global numérique (ou des filtres successifs (1, 3, 5)), en particulier d'un signal pilote à 19 KHz dans le cas de signaux multiplexés pour un émetteur FM.

**11.** Dispositif selon une des revendications 1 à 10, caractérisé en ce qu'une ligne de dérivation (17) pouvant être connectée par l'intermédiaire d'un commutateur (19) et reliant directement l'entrée (10) du dispositif avec sa sortie (11) et dans le cas de sa connexion séparant le signal de sortie du ou des filtres (1, 3, 5) de l'additionneur (6) de la sortie (11) du dispositif, est prévue.

**12.** Dispositif selon une des revendications 1 à 11, caractérisé en ce qu'en vue de la commande du filtre numérique (1) ou du filtre global numérique et/ou du convertisseur analogique/numérique (2) et/ou du convertisseur numérique/analogique (3) et/ou du commutateur (19) et/ou de la boucle à verrouillage de phase (9), est prévu un microprocesseur (7).

**13.** Dispositif selon une des revendications 2 à 12, pour la réception relais de signaux de données radio, caractérisé

- en ce qu'un codeur RDS est relié côté sortie à l'une des autres entrées (13) de l'additionneur (6) et côté entrée de référence à l'autre sortie (14) pour le signal pilote à 19 KHz;
- en ce que le codeur RDS présente une première et une seconde entrées et en ce que la première entrée du codeur RDS est reliée en vue de l'application des anciennes données RDS reçues par le récepteur relais à la sortie d'un décodeur RDS et la seconde entrée du codeur RDS est prévue pour l'application des nouvelles données RDS;
- en ce que le décodeur RDS est relié côté entrée au récepteur relais.

FIG. 1

EP 0 489 281 B1

FIG. 2

EP 0 489 281 B1

FIG. 3

symm. Eingang — 10 — 4 Analoges Vorfilter — 2 A/D-Wandlung — 1 Digitale Filterfunktion — 3 D/A-Wandlung — 5 Analoges Nachfilter — 17 — RDS-Signal 13 — 12 — 6 (+) — 19 — 11 — unsymm. Ausgang — 7 µP — 18 — 9 19 KHz PLL — 19 KHz — 14 — 15 LEDs Bedienfeld — 16 V24 Schnittstelle — 20

EP 0 489 281 B1

A) S    analoges
       Anti-Aliasing-Filter

B) S    digitales
       Anti-Aliasing-Filter

C) S    digitales
       Bandsperren-Filter

$f_1 = f/2$

D) S    digitales
       Rekonstruktions-
       Filter

E) S    analoges
       Rekonstruktions-
       Filter

0       100       200       300

f/KHz

FIG.4